(19) Europäisches Patentamt

European Patent Office

Office européen des brevets

(11) **EP 1 454 205 B1**

(12) **FASCICULE DE BREVET EUROPEEN**

(45) Date de publication et mention
de la délivrance du brevet:
**25.10.2006 Bulletin 2006/43**

(51) Int Cl.:
*G05F 1/46* (2006.01)    *H02H 3/12* (2006.01)

(21) Numéro de dépôt: 02799799.8

(22) Date de dépôt: **10.12.2002**

(86) Numéro de dépôt international:
**PCT/FR2002/004241**

(87) Numéro de publication internationale:
**WO 2003/050638 (19.06.2003 Gazette 2003/25)**

(54) **SOURCE ET SYSTEME CONTROLABLES D'ALIMENTATION D'UNE CHARGE ELECTRIQUE AMOVIBLE**

STEUERBARE STROMVERSORGUNG UND SYSTEM FÜR EINE ABNEHMBARE ELEKTRISCHE LAST

SOURCE AND SYSTEM WHICH ARE USED TO POWER A REMOVABLE ELECTRIC CHARGE

(84) Etats contractants désignés:
**AT BE BG CH CY CZ DE DK EE ES FI FR GB GR IE IT LI LU MC NL PT SE SI SK TR**

(30) Priorité: **11.12.2001 FR 0115999**

(43) Date de publication de la demande:
**08.09.2004 Bulletin 2004/37**

(73) Titulaire: **Barthélémy, Fabrice**
**91300 Massy (FR)**

(72) Inventeur: **Barthélémy, Fabrice**
**91300 Massy (FR)**

(74) Mandataire: **Pontet, Bernard**
**Pontet Allano & Associés s.e.l.a.r.l.**
**25 rue Jean-Rostand**
**Parc Club Orsay Université**
**91893 Orsay Cédex (FR)**

(56) Documents cités:
**US-A- 5 229 712       US-A- 5 324 990**

**Description**

L'invention concerne une source d'alimentation en énergie électrique destinée à être raccordée à une charge par l'intermédiaire d'un câble de raccordement amovible.

Plus précisément, l'invention concerne une source d'alimentation en énergie électrique destinée à être raccordée à une charge électrique par l'intermédiaire d'un câble de raccordement amovible, comportant :

- un circuit contrôlable de conversion d'énergie électrique pour convertir un signal électrique d'entrée en un signal électrique de sortie, au moins une caractéristique du signal électrique de sortie étant contrôlable,
- un circuit de commande du circuit contrôlable de conversion d'énergie pour contrôler ladite au moins une caractéristique du signal électrique de sortie en fonction d'un code de sélection représentatif des besoins de la charge connectée.

Les sources d'alimentation connues sont utilisées pour alimenter des appareils électriques et en particulier des appareils électriques domestiques. Les appareils électriques comportent typiquement un câble de raccordement et une charge électrique, le câble de raccordement étant destiné à connecter la charge électrique à la source d'alimentation. Ces sources d'alimentation sont, par exemple, logées à l'intérieur d'une prise murale et sont raccordées en entrée à une source de tension principale telle qu'une source de tension secteur 230 Vac. En sortie, elles délivrent une tension convertie destinée à alimenter l'appareil électrique. Ainsi, avec ces sources d'alimentation, il n'est plus nécessaire d'utiliser un convertisseur de tension externe, c'est-à-dire situé à l'extérieur de la prise murale.

Les caractéristiques de la tension de sortie convertie, telle que son amplitude, sont réglables de manière à permettre le raccordement de différents appareils électriques nécessitant des tensions d'alimentation différentes. Pour cela, la source d'alimentation est capable de recevoir un code de sélection de la tension de sortie à délivrer. Ce code de sélection est enregistré dans des moyens de stockage d'informations contenus dans le câble amovible de raccordement de l'appareil électrique. Ainsi, lorsqu'un appareil est débranché et qu'un nouvel appareil est raccordé à la source d'alimentation, la source d'alimentation lit le code de sélection à partir du câble de raccordement utilisé et adapte automatiquement la tension de sortie à celle requise par le nouvel appareil électrique.

Le document US 5,324,990 décrit un circuit de conservation de puissance pour un inverseur de tension alimenté par une batterie. Le circuit comprend des moyens pour basculer entre deux états selon qu'une charge est connectée ou non au circuit: un état ON et un état OFF.

Toutefois, avec les sources d'alimentation connues, lorsqu'un ancien appareil recevant une première tension est remplacé par un nouvel appareil nécessitant une seconde tension inférieure à la première, le nouvel appareil est soumis pendant un court laps de temps à une surtension. En effet, lorsque l'ancien appareil est débranché, la tension de sortie de la source d'alimentation demeure inchangée. Ainsi, lorsque le nouvel appareil est raccordé à la place de l'ancien, il reçoit une tension supérieure à la seconde tension requise, pendant le temps nécessaire pour lire le nouveau code de sélection et établir la seconde tension correspondante. Cette surtension temporaire peut endommager le nouvel appareil.

L'invention vise à remédier à cet inconvénient en proposant une source d'alimentation permettant d'éviter des conditions d'alimentation inacceptables pour des appareils électriques amovibles raccordés à une source d'alimentation contrôlable.

Elle a donc pour objet une source d'alimentation telle que définie plus haut, caractérisée en ce qu'elle comporte un circuit de détection de présence du câble apte à délivrer un signal d'absence du câble de raccordement au circuit de commande, et en ce que le circuit de commande est apte, en réponse au signal d'absence du câble de raccordement, à contrôler le circuit de conversion d'énergie pour obtenir, en sortie de celui-ci, une même valeur de repos prédéterminée à l'avance pour ladite au moins une caractéristique du signal électrique de sortie.

La source d'alimentation décrite ci-dessus permet d'éviter des conditions d'alimentation inacceptables pour la charge. En effet, la valeur de repos prédéterminée est choisie pour correspondre à une valeur des caractéristiques du signal électrique de sortie acceptable pour toutes les charges électriques susceptibles d'être raccordées à la source d'alimentation. Ainsi, grâce au circuit de détection de présence du câble dont elle est équipée, la source d'alimentation délivre en sortie un signal électrique dont les caractéristiques sont égales à la valeur de repos dès que le câble de raccordement de la charge est débranché. De cette manière, lorsqu'une nouvelle charge est raccordée, le signal électrique délivré en sortie a une valeur acceptable pour la nouvelle charge avant même que les caractéristiques du signal électrique de sortie aient pu être adaptées aux exigences de la nouvelle charge. Il n'existe donc plus de risque d'endommager une charge lors de son branchement.

Suivant d'autres caractéristiques d'une source d'alimentation en énergie électrique conforme à l'invention :

- le circuit de détection de présence de câble est apte à délivrer un signal de présence du câble de raccordement au circuit de commande, ledit signal de présence du câble de raccordement étant fonction du code de sélection représentatif des besoins de la charge connectée, et le circuit de commande est apte, en réponse au signal de présence du câble de raccordement, à contrôler le circuit contrôlable de conversion d'énergie électrique pour obtenir, en sortie de celui-ci, une valeur de ladite au moins une caractéristique du signal électrique de sortie correspondant aux besoins de la charge connectée;

- elle comporte :

 - au moins une première borne de connexion au câble de raccordement pour transmettre à la charge le signal électrique de sortie délivré par le circuit de conversion d'énergie électrique,
 - au moins une deuxième borne de connexion au câble de raccordement destinée à coopérer avec une borne correspondante du câble de raccordement pour indiquer l'absence ou la présence du câble de raccordement, cette au moins une deuxième borne de connexion étant raccordée au circuit de détection ;

- elle comporte au moins une troisième borne de connexion au câble de raccordement pour recevoir de ce dernier le code de sélection, cette au moins une troisième borne étant raccordée au circuit de détection.
- le circuit de détection de présence du câble comporte un interrupteur électrique basculable entre un état de repos et un état actif dans lequel il indique la présence du câble de raccordement, ce basculement s'effectuant sous la commande du câble de raccordement,
- l'interrupteur électrique est un interrupteur d'électricité mécanique déplaçable entre une position de repos et une position active dans laquelle il indique la présence du câble de raccordement, ce déplacement s'effectuant sous l'action des forces mécaniques mises en oeuvre pour accoupler ladite au moins une deuxième borne à la borne correspondante du câble de raccordement,
- le circuit contrôlable de conversion d'énergie est apte à délivrer un signal électrique de sortie dont ladite au moins une caractéristique contrôlable est réglable dans une plage de valeurs comprises entre une valeur minimale et une valeur maximale, et la valeur de repos est égale à la valeur minimale.
- une caractéristique du signal électrique de sortie contrôlable est l'amplitude de la tension délivrée par la source d'alimentation, et
- une caractéristique du signal électrique de sortie contrôlable est l'intensité du courant délivré par la source d'alimentation.

L'invention a également pour objet un système d'alimentation en énergie électrique d'une charge électrique, caractérisé en ce qu'il comporte :

- une source d'alimentation en énergie électrique conforme à l'invention, et

- un câble amovible de raccordement de la charge à la source d'alimentation, ledit câble étant adapté pour coopérer avec le circuit de détection de présence du câble de la source d'alimentation.

Suivant d'autres caractéristiques d'un système d'alimentation en énergie électrique conforme à l'invention :

- le câble de raccordement comporte un dispositif amovible d'adaptation du câble à la source d'alimentation.
- le circuit de commande de la source d'alimentation est apte à réguler ladite au moins une caractéristique du signal électrique de sortie, et une boucle de régulation de ladite au moins une caractéristique du signal de sortie est raccordée à la sortie du circuit contrôlable de conversion d'énergie électrique de la source d'alimentation et à une entrée du circuit de commande, une partie de la boucle de régulation étant logée dans le câble de raccordement lorsque celui-ci est raccordé à la source d'alimentation,
- le circuit de commande de la source d'alimentation est apte à réguler ladite au moins une caractéristique du signal électrique de sortie, et une boucle de régulation de ladite au moins une caractéristique du signal de sortie est raccordée à la sortie du circuit contrôlable de conversion d'énergie électrique de la source d'alimentation et à une entrée du circuit de commande, la boucle de régulation étant uniquement logée à l'intérieur de la source d'alimentation,
- la boucle de régulation comporte au moins une résistance, la valeur de ladite au moins une résistance formant un code de sélection,
- au moins une résistance est logée dans le câble de raccordement amovible, et
- la source d'alimentation comporte plusieurs résistances aptes à être raccordées à la boucle de régulation sous la commande du câble de raccordement, la valeur de chacune de ces résistances formant, seule ou en combinaison avec les autres résistances, un code de sélection.

L'invention sera mieux comprise à la lecture de la description qui va suivre, donnée uniquement à titre d'exemple et faite en se référant aux dessins sur lesquels :

- la figure 1 est une illustration schématique d'une architecture électronique d'une source d'alimentation conforme à l'invention ;
- la figure 2 est un schéma électronique d'un premier mode de réalisation d'un circuit de détection de présence de câble dont est équipée une source d'alimentation conforme à l'invention;
- les figures 3A et 3B sont des schémas électroniques de deux variantes du circuit de détection de présence de câble de la figure 2 ;
- les figures 4A, 4B, 4C et 4D sont respectivement des vues schématiques de quatre modes de réalisation d'un câble de raccordement destiné à être raccordé à une source d'alimentation conforme à l'invention; et
- la figure 5 est un schéma électronique d'une variante d'une source d'alimentation conforme à l'invention.

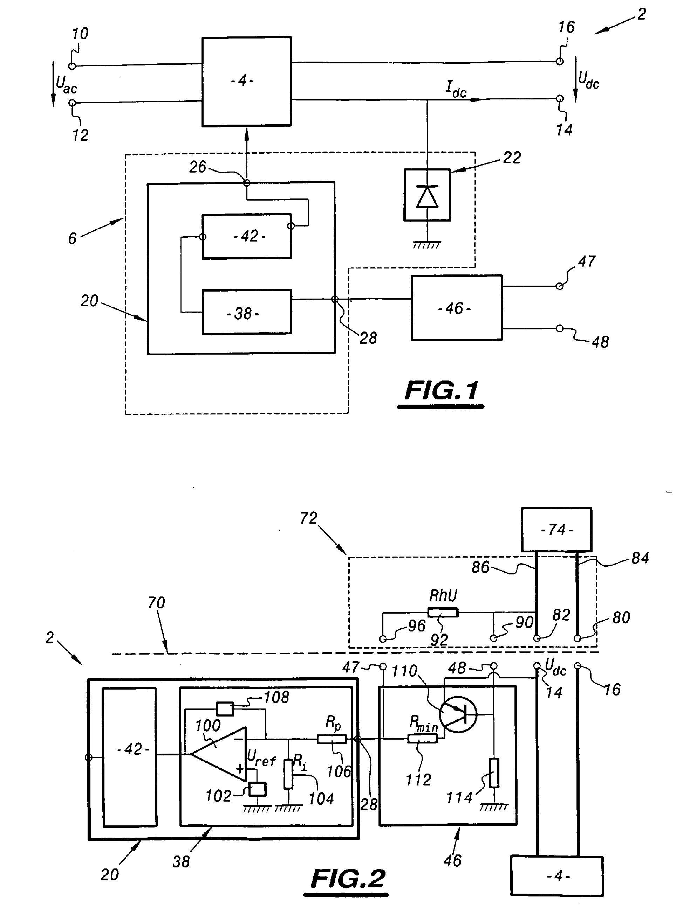

La figure 1 représente une source d'alimentation 2 apte à être logée à l'intérieur d'une prise murale. La source 2 est équipée d'un convertisseur de tension 4 contrôlable et d'un circuit de commande 6.

Le convertisseur de tension 4 est raccordé à une source d'alimentation alternative (non représentée) par l'intermédiaire de deux bornes d'entrée 10 et 12. Cette source de tension alternative délivre à l'entrée du convertisseur une tension alternative Uac comprise entre 80 et 250 Vac. La sortie de puissance du convertisseur 4 est raccordée à deux bornes de connexion 14 et 16.

Ce convertisseur de tension 4 est apte à convertir la tension alternative Uac en une tension continue, notée Udc. Il est adapté pour que la tension continue Udc soit égale à une valeur fixe, cette valeur fixe étant réglable sous le contrôle du circuit de commande 6, entre une valeur minimale Umin et une valeur maximale Umax. A titre d'exemple, les valeurs Umin et Umax sont respectivement égales à 1 Vdc et 42 Vdc. Ainsi, une caractéristique contrôlable du convertisseur de tension 4 est ici la valeur de la tension Udc délivrée en sortie. La borne de connexion 16 est au potentiel de référence, tandis que la borne de connexion 14 est au potentiel Udc.

Le convertisseur 4 est par exemple réalisé à partir d'un convertisseur indirect, également plus connu sous le terme de convertisseur "Flyback". Ces convertisseurs étant connus, leur structure ne sera pas décrite ici plus en détail. Pour plus d'informations, le lecteur pourra par exemple se référer au document suivant : "Alimentation à découpage", Michel Girard, Edi-Sciences, 1993.

Le circuit de commande 6 comporte un régulateur de tension 20 et un circuit 22 de limitation de tension.

Le régulateur 20 est propre à contrôler le convertisseur de tension 4 en fonction d'une tension de référence constante notée Uref pour obtenir en sortie du convertisseur 4 une tension Udc stable et correspondant à la tension de référence Uref. A cet effet, le régulateur 20 comporte une sortie 26 de commande raccordée au convertisseur de tension 4 et une entrée 28 de boucle de régulation. L'entrée 28 est destinée à recevoir un signal proportionnel à la tension Udc.

Le régulateur 20 comporte également un comparateur 38 et un circuit 42 de génération du signal de commande. Une entrée du comparateur 38 est raccordée à l'entrée 28 du régulateur 20 et une sortie du comparateur 38 est raccordée à une entrée du circuit 42. Le comparateur 38 est destiné à établir et à transmettre, à sa sortie, un signal de correction en tension proportionnel à la différence de tension existant entre le signal présent sur son entrée 28 et la tension de référence Uref.

Un exemple de réalisation du comparateur 38 sera décrit en regard de la figure 2.

Le circuit 42 de génération du signal de commande comporte une sortie raccordée à la sortie 26 de signal de commande et une entrée raccordée à la sortie du comparateur 38 pour recevoir de ce dernier le signal de correction de la tension. Ce circuit 42 est propre à convertir le signal de correction reçu en un signal correspondant de commande du convertisseur 4, le signal de commande visant à annuler les écarts mesurés par le comparateur 38 entre le signal proportionnel à la tension Udc et la tension de référence Uref. Le circuit 42 est classique et ne sera donc pas décrit ici en détail.

Le circuit 22 de limitation de tension est raccordé entre la borne de connexion 14 et une masse de la source d'alimentation 2. Il est apte à empêcher que la tension Udc dépasse le seuil de 42 Vdc. Il est par exemple réalisé à partir de diodes zener.

Finalement, la source d'alimentation 2 comporte également un circuit 46 de détection de présence du câble de raccordement. Ce circuit 46 comporte une première entrée raccordée à une borne de connexion 47 de réception d'un code de sélection et une deuxième entrée raccordée à une borne de connexion 48 d'indication de présence du câble. Le circuit 46 comporte également une sortie raccordée à l'entrée 28 du régulateur 20. Le circuit 46 est apte à délivrer un signal d'absence du câble de raccordement au circuit de commande 6 pour que celui-ci, en réponse, commande le convertisseur 4 pour établir une tension de repos notée $U_0$. Il est également apte à délivrer un signal de présence du câble de raccordement au circuit de commande 6 pour que celui-ci, en réponse, commande le convertisseur 4 pour établir une tension de sortie Udc correspondant au code de sélection reçu par l'intermédiaire de la borne de connexion 47. Un exemple de réalisation d'un circuit de détection 46 est décrit en regard de la figure 2.

Les bornes de connexion 14, 16, 47 et 48 sont par exemple des fiches femelles d'une prise murale dans laquelle est logée la source d'alimentation 2.

Sur la figure 2, les éléments déjà décrits en regard de la figure 1 portent les mêmes références.

Sur cette figure, une ligne 70 symbolise l'interface entre la source d'alimentation 2 logée dans une prise murale et un câble amovible 72 de raccordement à une charge électrique 74.

Le câble de raccordement 72 comporte ici deux bornes 80, 82 de connexion de puissance destinées respectivement à être raccordées aux bornes 16 et 14 de la source d'alimentation 2. Ces bornes 80, 82 sont raccordées respectivement à un conducteur électrique 84 et à un conducteur électrique 86 logés dans le câble 72. Les conducteurs électriques 84 et 86 sont destinés à transporter le signal électrique de puissance de la source d'alimentation 2 jusqu'à la charge 74.

Le câble de raccordement 72 comporte également une borne de connexion 90 destinée à indiquer la présence du câble de raccordement et une résistance 92 de sélection de la tension de sortie.

La borne 90 est raccordée à l'intérieur du câble 72, directement au conducteur électrique 86. Cette borne 90 est adaptée pour être raccordée à la borne 48 d'indication de présence du câble de la source d'alimentation 2.

La résistance 92 définissant un code de sélection est raccordée entre le conducteur électrique 86 et une borne de connexion 96 du câble 72, adaptée pour être raccordée à la borne 47 de la source d'alimentation 2. La résistance 92 a une valeur, notée RhU, indiquant la tension dont a besoin la charge 74. La valeur RhU est déterminée pour définir une tension de sortie Udc supérieure ou égale à Umin et inférieure ou égale à Umax.

Les bornes de connexion 80, 82, 90 et 96 sont par exemple les fiches mâles d'une prise.

Le comparateur 38 comporte un amplificateur linéaire 100 dont la sortie est raccordée au circuit 42 du régulateur 20 de manière à transmettre à ce dernier le signal de correction de tension. L'entrée non inverseuse de l'amplificateur 100 est raccordée à une référence de tension 102 délivrant la tension constante et stable Uref. L'entrée inverseuse de l'amplificateur 100 est raccordée à la masse par l'intermédiaire d'une résistance 104 dont la valeur est notée Ri et à une première borne d'une résistance 106 dont la valeur est notée Rp. La seconde borne de la résistance 106 est raccordée à l'entrée 28 de la boucle de régulation. Une résistance 108 de contre réaction est raccordée entre l'entrée inverseuse et la sortie de l'amplificateur 100.

Le circuit de détection 46 comporte un transistor PNP 110 dont le collecteur est raccordé à l'entrée 28 du régulateur 20 par l'intermédiaire d'une résistance 112 dont la valeur est notée Rmin. La valeur Rmin définit la tension de repos notée $U_0$, cette tension $U_0$ étant la valeur de la tension Udc lorsque le câble de raccordement 72 n'est pas raccordé à la source d'alimentation 2. La valeur Rmin est ici choisie pour que $U_0$ soit égale à Umin. L'émetteur du transistor 110 est raccordé à la borne de connexion 14. La base de ce transistor est raccordée d'une part à la masse par une résistance 114 et d'autre part à la borne 48 d'indication de présence du câble de raccordement. L'entrée raccordée à la borne de connexion 47 est directement raccordée à l'entrée 28 du régulateur 20.

Le fonctionnement de la source d'alimentation 2 va maintenant être décrit à l'aide des figures 1 et 2.

Lorsque le câble de raccordement 72 n'est pas raccordé à la source d'alimentation 2, la boucle de régulation raccordée à l'entrée 28 du régulateur 20 s'établit par l'intermédiaire de la résistance 112. Le transistor 110 du circuit de détection 46 est passant et la résistance 112 est donc connectée à la borne de connexion 14. Dans ces conditions, après une courte phase transitoire lorsque le câble de raccordement 72 vient juste d'être débranché, les tensions aux entrées inverseuse et non inverseuse de l'amplificateur 100 sont égales. En effet, toute différence entre ces deux entrées se traduit par un signal de correction de tension non nul qui est transmis au circuit 42 de génération du signal de commande. En réponse à ce signal de correction non nul, le circuit 42 agit sur le convertisseur 4 soit pour augmenter, soit pour diminuer la tension de sortie Udc de manière à annuler l'écart entre la tension présente sur l'entrée inverseuse et la tension présente sur l'entrée non inverseuse de l'amplificateur 100. Ainsi, lorsque le câble de raccordement 72 n'est pas branché, la tension de sortie Udc se calcule suivant la relation suivante :

$$Udc = Uref \times \frac{Rp + Ri + R\min}{Ri} = U_0 = U\min$$

La valeur Rmin de la résistance 112 est ici choisie pour que la tension de repos $U_0$ soit égale à la tension minimale Umin délivrable en sortie du convertisseur 4. La tension de sortie Udc est donc égale à Umin lorsqu'aucun câble de raccordement est connecté à la source d'alimentation 2.

Lorsque le câble de raccordement 72 est raccordé à la source d'alimentation 2, la base du transistor 110 est alors raccordée par l'intermédiaire des bornes 48 et 90 à la tension de sortie Udc. L'émetteur et la base du transistor 110 étant court-circuités, celui-ci ne conduit plus.

La boucle de régulation du régulateur 20 ne s'établit donc plus par l'intermédiaire de la résistance 112, mais par l'intermédiaire de la résistance 92 contenue dans le câble de raccordement 72. En effet, cette résistance 92 est raccordée à l'entrée 28 du régulateur 20 par l'intermédiaire des bornes de connexion 96 et 47.

Dans ces conditions, après une brève phase transitoire, les tensions aux entrées inverseuse et non inverseuse de l'amplificateur 100 sont égales. La tension de sortie Udc se calcule alors selon la formule suivante :

$$Udc = Uref \times \frac{(Rp + Ri + RhU)}{Ri}$$

La valeur RhU de la résistance 92 étant choisie pour définir une tension supérieure ou égale à la tension Umin, la tension Udc est donc supérieure ou égale à la tension de repos $U_0$ délivrée par la source d'alimentation 2 lorsque aucun câble de raccordement n'est connecté. Ainsi, lors de la phase transitoire pendant laquelle la tension délivrée par la source d'alimentation 2 n'est pas encore égale à celle requise par la charge 74, la tension Udc varie progressivement de sa valeur de repos $U_0$ vers la valeur correspondant à RhU. La charge électrique qui vient juste d'être raccordée n'est donc soumise à aucune tension inacceptable pendant cette phase transitoire.

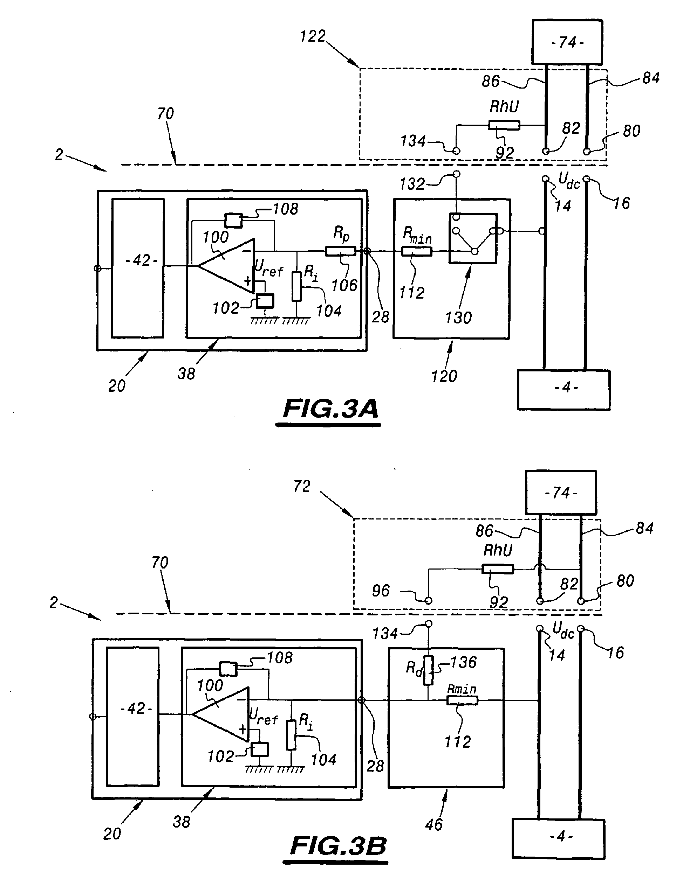

La figure 3A représente un autre mode de réalisation d'un circuit de détection 120 apte à coopérer avec un câble de raccordement 122.

Sur cette figure 3A, les éléments déjà décrits en regard des figures 1 et 2 précédentes portent les mêmes références.

Le circuit de détection 120 comporte un interrupteur d'électricité mécanique 130 raccordé par l'intermédiaire de la résistance 112 à l'entrée 28 du régulateur 20. Cet interrupteur mécanique 130 est déplaçable entre une position de repos et une position active sous la commande du câble 122. Dans la position de repos correspondant au cas où le câble 122 n'est pas raccordé à la source d'alimentation 2, l'interrupteur 130 raccorde la borne de connexion 14 à l'entrée 28 du régulateur 20 par l'intermédiaire de la résistance 112. Dans sa position active correspondant au cas où le câble 122 est raccordé à la source d'alimentation 2, l'interrupteur 130 raccorde une borne de connexion 132 à l'entrée 28 du régulateur 20 par l'intermédiaire de la résistance 112. La borne 132 est par exemple un poussoir métallique apte à la fois à assurer la continuité électrique avec une borne de connexion correspondante du câble 122 et à déplacer l'interrupteur 130 entre ses positions active et inactive.

Le câble de raccordement 122 est similaire au câble de raccordement 72 à l'exception du fait que les bornes de connexion 90 et 96 (figure 2) sont remplacées par une seule et même borne de connexion 134. La borne de connexion 134 est raccordée au conducteur électrique 86 par l'intermédiaire de la résistance 92. La borne 134 est adaptée pour coopérer avec la borne 132 du circuit de détection 120 de manière à simultanément déplacer l'interrupteur 130 en position active et à établir la continuité électrique entre la borne 134 et la borne 132. Ainsi, dans cette variante, la borne 132 réunit en une seule borne les fonctions des bornes 47 et 48 de la figure 2.

La variante décrite en regard de la figure 3A fonctionne de façon similaire à ce qui vient d'être décrit. Toutefois, dans cette variante, la valeur de la tension de sortie Udc, lorsqu'un câble de raccordement est raccordé, se calcule selon la formule suivante :

$$Udc = Uref \times \frac{(Rp + Ri + Rmin + RhU)}{Ri}$$

La figure 3B représente un mode de réalisation différent du circuit de détection 46. Dans ce mode de réalisation, le transistor 110 et la résistance 114 du circuit de détection 46 sont supprimés. Les bornes de connexion 47 et 48 raccordées en entrée du circuit de détection 46 sont remplacées par une seule borne de connexion 134. La résistance 112 est directement raccordée à la borne de connexion 14 et une résistance 136 est interposée entre la borne de connexion 134 et la sortie du circuit de détection 46. Finalement, la résistance 106 du comparateur 38 est supprimée et la borne inverseuse de l'amplificateur 100 est directement raccordée à l'entrée 28 du régulateur 20.

De façon similaire à ce qui a été décrit en regard de la figure 3A, le câble de raccordement 72 (figure 2) est adapté pour coopérer avec la borne de connexion 134. Ainsi, la borne de connexion 90 (figure 2) du câble de raccordement 72 est supprimée et la résistance 92 du câble de raccordement 72 est raccordée directement au conducteur 84 et non plus au conducteur 86.

Le fonctionnement de ce mode de réalisation découle de celui décrit en regard de la figure 2. Toutefois, la valeur de la tension de sortie Udc, lorsqu'un câble de raccordement est raccordé, se calcule selon la formule suivante :

$$Udc = Ref . [ Rmin.(Ri + RhU + Rd) + Ri.(RhU + Rd) ] / (Ri.(RhU + Rd)$$

On notera que, dans le mode de la réalisation de la figure 3B, le circuit de détection 46 ne comporte pas d'interrupteur électrique et que la résistance 136 est une résistance de prévention des surtensions lorsque la résistance 92 est court-circuitée, c'est-à-dire lorsque RhU est égale à zéro.

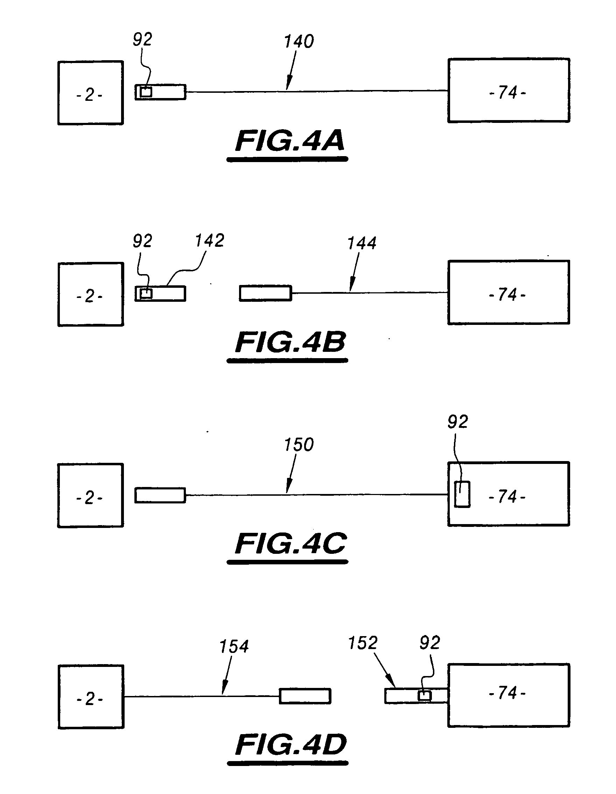

Les figures 4A, 4B, 4C et 4D représentent quatre possibilités pour loger la résistance 92 de sélection de tension du côté de l'appareil électrique. La figure 4A représente une première possibilité dans laquelle la résistance de sélection de tension est solidaire de et intégrée à demeure à l'extrémité d'un cordon amovible 140 pour former ensemble le câble de raccordement, destiné à être connecté à la source d'alimentation 2.

La figure 4B représente une deuxième possibilité dans laquelle la résistance 92 de sélection de tension est placée dans un dispositif 142 de codage amovible. Ce dispositif 142 est adapté pour être raccordé de manière amovible d'un côté à la source d'alimentation 2 et de l'autre côté pour recevoir un cordon 144 de raccordement à la charge 74. Le cordon de raccordement 144 est par exemple un câble classique. Le cordon 144 et le dispositif de codage forment le câble de raccordement.

La figure 4C représente une troisième possibilité dans laquelle la résistance 92 de sélection est contenue dans la charge 74, la charge 74 étant raccordée à la source d'alimentation 2 par un cordon 150. Ce cordon 150 comporte par exemple deux conducteurs électriques supplémentaires destinés à être raccordés entre la résistance 92 contenue dans la charge 74 et les bornes de connexion 47, 48 de la source d'alimentation 2. La résistance 92 intégrée dans la charge 74 et le cordon 150 forment ensemble un troisième mode de réalisation du câble de raccordement.

La figure 4D représente un quatrième mode de réalisation d'un câble de raccordement. Dans ce mode de réalisation, le câble de raccordement est réduit à un dispositif 152 de codage amovible. Ce dispositif 152 est adapté pour être raccordé par une extrémité à la charge 74 et par son autre extrémité à une rallonge électrique 154. Le dispositif 152 est similaire au dispositif 142 de la figure 4B et comporte la résistance de sélection 92. La rallonge électrique 154 est, par exemple, fixée de façon non amovible par son extrémité opposée au dispositif 152 à la source d'alimentation 2. La rallonge électrique 154 permet d'éloigner les bornes de connexion de la source d'alimentation 2 de ses composants électriques.

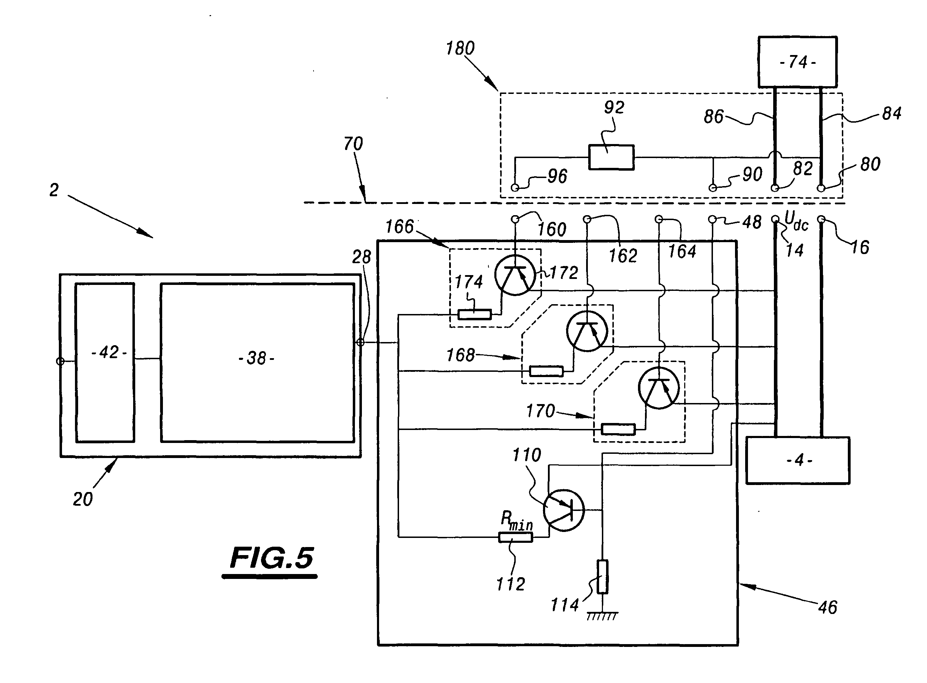

Finalement, la figure 5 représente un dernier mode de réalisation dans lequel des résistances de sélection de tension sont logées à l'intérieur de la source d'alimentation.

Sur cette figure 5, la source d'alimentation est similaire à celle décrite en regard des figures 1 et 2. Toutefois, la borne de connexion 47 de la figure 1 est remplacée par trois bornes de connexion 160, 162 et 164 distinctes et toutes raccordées à l'entrée 28 du régulateur 20 par l'intermédiaire des circuits respectifs 166, 168 et 170 de commutation d'une résistance contenus dans le circuit de détection 46.

Le circuit 166 de commutation d'une résistance comporte un transistor PNP 172 dont le collecteur est raccordé à l'entrée 28 du régulateur 20 par l'intermédiaire d'une résistance 174 de sélection de tension. La valeur de la résistance 174 est choisie pour correspondre à une première valeur de la tension de sortie du convertisseur 4 prédéterminée à l'avance. L'émetteur et la base de ce transistor 172 sont respectivement raccordés à la borne 14 et à la borne 160.

Les circuits 168 et 170 de commutation d'une résistance sont similaires au circuit 166 mis à part que leurs résistances respectives de sélection de tension correspondent à des deuxième et troisième valeurs différentes de la tension de sortie Udc.

Le câble de raccordement 180 est similaire au câble de raccordement 72 à l'exception du fait que la valeur de la résistance 92 ne forme plus un code de sélection d'une tension de sortie Udc. Dans ce mode de réalisation, c'est la position de la borne de connexion 96 qui indique à la source d'alimentation quelle est la tension à délivrer pour la charge 74. Dans l'exemple représenté, cette borne de connexion 96 est adaptée pour être uniquement raccordée à la borne de connexion 160.

Le fonctionnement du mode de réalisation de la figure 5 se déduit également de celui de la figure 2. En effet, le fonctionnement du circuit de la figure 5 diffère essentiellement de celui des figures 1 et 2 par la façon dont la résistance de sélection est activée. Ainsi, lorsque le câble 180 de raccordement est raccordé à la source d'alimentation 2, seule la jonction émetteur-base du transistor 172 est polarisée et celui devient passant. La boucle de régulation s'établit donc par l'intermédiaire de la résistance 174, ce qui fixe alors la tension de sortie Udc à une valeur correspondant à la valeur de cette résistance 174. Dans ce mode de réalisation, la boucle de régulation de la tension Udc est donc entièrement logée dans la source d'alimentation 2.

De préférence, la valeur de repos choisie correspond à la tension minimale Umin que peut délivrer la source d'alimentation 2. En effet, dans ces conditions, lorsque aucun câble de raccordement n'est connecté à la source d'alimentation 2, celle-ci délivre automatiquement la tension Umin. Ce mode de fonctionnement correspond donc à un état de veille de la source d'alimentation dans laquelle la consommation d'énergie est minimale.

En variante, les différentes résistances, utilisées dans les circuits de détection ou dans le comparateur, peuvent être remplacées par des diodes zener.

Dans une autre variante, au lieu de faire varier la valeur de la résistance placée entre la borne inverseuse de l'amplificateur 100 et la borne 14 de la source d'alimentation 2, c'est la valeur de la résistance 104 qui est modifiée.

En variante, le régulateur est apte à contrôler à la fois la tension de sortie Udc et l'intensité de sortie Idc du convertisseur 4. Pour cela, il comporte une première entrée similaire à l'entrée 28 et une seconde entrée de régulation du courant Idc. Dans cette variante, le câble de raccordement ou le dispositif 142 comporte une première et une seconde résistances. La première résistance est une résistance de sélection de la tension similaire à la résistance 92. La seconde résistance est une résistance de sélection de l'intensité du courant et est apte à être raccordée à la seconde entrée de régulation. La valeur de la seconde résistance correspond à l'intensité du courant requis par la charge 74. De façon similaire à ce qui a été décrit pour la tension de sortie Udc, le circuit de détection de présence du câble de raccordement est adapté pour fournir à la seconde entrée du régulateur un signal correspondant à un courant de repos lorsque le câble de raccordement n'est pas connecté. En réponse à ce signal correspondant au courant de repos, le régulateur agit sur le convertisseur 4 pour délivrer en sortie le courant de repos. Au contraire, lorsque le câble de raccordement est connecté à la source d'alimentation, le régulateur agit sur le convertisseur 4 pour délivrer en sortie un courant correspondant à la valeur de la seconde résistance. Avantageusement pour économiser de l'énergie, le courant de repos correspond à la valeur minimale du courant délivrable par le convertisseur 4. Dans le cadre des applications de cette variante pour recharger des batteries telles que les batteries de téléphones portables, cette variante est adaptée pour que, tant que la tension de la batterie à recharger est inférieure à la tension fixée par la première résistance, la source d'alimentation se comporte uniquement comme une source de courant dont l'intensité est fixée par la seconde résistance. Lorsque la tension de la batterie est égale à la tension fixée par la première résistance, la source d'alimentation se comporte alors uniquement comme une source de tension dont la valeur est fixée par la première résistance. Pour un exemple de réalisation de cette variante du régulateur, le lecteur peut se référer aux notes d'application du circuit intégré "TSM101" de la société "ST Microelectronics" (Worldwide Headquarters, 165, rue Edouard Branly, B.P. 112 — Technoparc du Pays de Gex, France — 01637 Saint-Geny-Pouilly, France).

Dans une autre variante, le régulateur 4 est uniquement apte à contrôler l'intensité de sortie Idc du convertisseur 4. La source d'alimentation 2 est alors une source de courant. Dans cette variante, la résistance 92 ne définit donc pas la tension Udc à délivrer en sortie, mais l'intensité du courant Idc à délivrer en sortie. Cette variante trouve notamment des applications pour recharger les batteries telles que les batteries de téléphones portables.

Dans une autre alternative, le convertisseur de tension est raccordé non pas à une source d'alimentation alternative, mais à une source d'alimentation continue.

Dans une variante simplifiée, la résistance 106 du comparateur 38 est supprimée.

De même, dans une variante simplifiée du mode de réalisation décrit à la figure 3B, la résistance 136 est supprimée.

En variante, le câble 180 de la figure 5 comporte plusieurs bornes de connexion similaires à la borne de connexion 96 de manière à commander simultanément plusieurs circuits de commutation d'une résistance du circuit de détection 46. Dans cette variante, le code de sélection est formé par la combinaison de plusieurs résistances.

Bien que le circuit de détection 46 décrit dans les exemples de réalisation précédents ait uniquement été réalisé à l'aide de composants électriques analogiques, en variante, le circuit de détection 46 est réalisé à partir de composants électroniques numériques tel qu'un convertisseur analogique numérique ou un potentiomètre numérique.

Finalement, la source d'alimentation 2 peut également être logée dans une prise multiple ou une prise modulaire.

**Revendications**

**1.** Source (2) d'alimentation en énergie électrique destinée à être raccordée à une charge électrique (74) par l'intermédiaire d'un câble (72 ; 122 ; 180) de raccordement amovible, comportant :

- un circuit (4) contrôlable de conversion d'énergie électrique pour convertir un signal électrique d'entrée en un signal électrique de sortie, au moins une caractéristique du signal électrique de sortie étant contrôlable,
- un circuit (6) de commande du circuit (4) contrôlable de conversion d'énergie pour contrôler la valeur de ladite au moins une caractéristique du signal électrique de sortie en fonction d'un code de sélection représentatif des besoins de la charge connectée,

**caractérisée en ce qu'**elle comporte un circuit (46 ; 120) de détection de présence du câble (72 ; 122 ; 180) apte à délivrer un signal d'absence du câble de raccordement au circuit de commande (6), et **en ce que** le circuit de commande (6) est apte, en réponse au signal d'absence du câble de raccordement, à contrôler le circuit (4) de conversion d'énergie pour obtenir, en sortie de celui-ci, une même valeur de repos prédéterminée à l'avance pour ladite au moins une caractéristique du signal électrique de sortie.

**2.** Source (2) d'alimentation selon la revendication 1, **caractérisée en ce que** le circuit (46 ; 120) de détection de présence de câble est apte à délivrer un signal de présence du câble de raccordement au circuit de commande (6), ledit signal de présence du câble de raccordement étant fonction du code de sélection représentatif des besoins de la charge connectée, et **en ce que** le circuit de commande (6) est apte, en réponse au signal de présence du câble de raccordement, à contrôler le circuit (4) contrôlable de conversion d'énergie électrique pour obtenir, en sortie de celui-ci, une valeur de ladite au moins une caractéristique du signal électrique de sortie correspondant aux besoins de la charge connectée.

3. Source d'alimentation (2) selon la revendication 1 ou 2, **caractérisée en ce qu'**elle comporte :

   - au moins une première borne (14, 16) de connexion au câble de raccordement (72 ; 122 ; 180) pour transmettre à la charge (74) le signal électrique de sortie délivré par le circuit (4) de conversion d'énergie électrique,
   - au moins une deuxième borne (48 ; 132 ; 134) de connexion au câble de raccordement (72 ; 122 ; 180) destinée à coopérer avec une borne (90 ; 134) correspondante du câble de raccordement pour indiquer l'absence ou la présence du câble de raccordement, cette au moins une deuxième borne de connexion étant raccordée au circuit de détection (46 ; 120).

4. Source d'alimentation (2) selon la revendication 3, **caractérisée en ce qu'**elle comporte au moins une troisième borne (47; 160, 162, 164) de connexion au câble de raccordement pour recevoir de ce dernier le code de sélection, cette au moins une troisième borne étant raccordée au circuit de détection (46 ).

5. Source d'alimentation (2) selon l'une quelconque des revendications précédentes, **caractérisée en ce que** le circuit (46) de détection de présence du câble (72) comporte un interrupteur électrique (110) basculable entre un état de repos et un état actif dans lequel il indique la présence du câble de raccordement (122), ce basculement s'effectuant sous la commande du câble de raccordement (122).

6. Source d'alimentation (2) selon la revendication 5, **caractérisée en ce que** l'interrupteur électrique est un interrupteur d'électricité mécanique (130) déplaçable entre une position de repos et une position active dans laquelle il indique la présence du câble de raccordement (122), ce déplacement s'effectuant sous l'action des forces mécaniques mises en oeuvre pour accoupler ladite au moins une deuxième borne (132) à la borne correspondante du câble de raccordement (122).

7. Source d'alimentation (2) selon l'une quelconque des revendications précédentes, **caractérisée en ce que** le circuit (4) contrôlable de conversion d'énergie est apte à délivrer un signal électrique de sortie dont ladite au moins une caractéristique contrôlable est réglable dans une plage de valeurs comprises entre une valeur minimale et une valeur maximale, et **en ce que** la valeur de repos est égale à la valeur minimale.

8. Source d'alimentation (2) selon l'une quelconque des revendications précédentes, **caractérisée en ce qu'**une dite caractéristique du signal électrique de sortie contrôlable est l'amplitude de la tension délivrée par la source d'alimentation (2).

9. Source d'alimentation (2) selon l'une quelconque des revendications précédentes, **caractérisée en ce qu'**une dite caractéristique du signal électrique de sortie contrôlable est l'intensité du courant délivré par la source d'alimentation (2).

10. Système d'alimentation en énergie électrique d'une charge électrique (74), **caractérisé en ce qu'**il comporte :

    - une source (2) d'alimentation en énergie électrique selon l'une quelconque des revendications précédentes, et
    - un câble (72 ; 122 ; 180) amovible de raccordement de la charge (74) à la source d'alimentation (2), ledit câble étant adapté pour coopérer avec le circuit (46 ; 120) de détection de présence du câble de la source d'alimentation.

11. Système selon la revendication 10, **caractérisé en ce que** le câble de raccordement comporte un dispositif (142) amovible d'adaptation du câble à la source d'alimentation (2).

12. Système selon la revendication 10 ou 11, **caractérisé en ce que** le circuit (6) de commande de la source d'alimentation est apte à réguler ladite au moins une caractéristique du signal électrique de sortie, et **en ce qu'**une boucle de régulation de ladite au moins une caractéristique du signal de sortie est raccordée à la sortie du circuit (4) contrôlable de conversion d'énergie électrique de la source d'alimentation (2) et à une entrée du circuit de commande (6) une partie de la boucle de régulation étant logée dans le câble de raccordement lorsque celui-ci est raccordé à la source d'alimentation (2).

**13.** Système selon la revendication 10 ou 11, **caractérisé en ce que** le circuit (6) de commande de la source d'alimentation est apte à réguler ladite au moins une caractéristique du signal électrique de sortie, et **en ce qu'**une boucle de régulation de ladite au moins une caractéristique du signal de sortie est raccordée à la sortie du circuit (4) contrôlable de conversion d'énergie électrique de la source d'alimentation (2) et à une entrée du circuit de commande (6), la boucle de régulation étant uniquement logée à l'intérieur de la source d'alimentation (2).

**14.** Système selon la revendication 12 ou 13, **caractérisé en ce que** la boucle de régulation comporte au moins une résistance (92), la valeur de ladite au moins une résistance formant un code de sélection.

**15.** Système selon les revendications 12 et 14, **caractérisé en ce que** ladite au moins une résistance est logée dans le câble de raccordement amovible.

**16.** Système selon la revendication 13, **caractérisé en ce que** la source d'alimentation (2) comporte plusieurs résistances (174) aptes à être raccordées à la boucle de régulation sous la commande du câble de raccordement (180), la valeur de chacune de ces résistances (174) formant, seule ou en combinaison avec les autres résistances (174), un code de sélection.

**Claims**

**1.** An electric power supply source (2) which is intended to be connected to an electric load (74) by means of a removable connecting cable (72; 122; 180), including :

- a controllable electric power conversion circuit (4) which is used to convert an electric input signal into an electric output signal, at least one characteristic of said electric output signal being controllable;
- a control circuit (6) for the controllable power conversion circuit (4) which is used to control the value of said at least one characteristic of the electric output signal according to a selection code that is representative of the requirements of the connected load,

**characterised in that** it includes a cable (72; 122; 180) presence detection circuit (46; 120) capable of delivering a signal of absence of the connecting cable to the control circuit (6), and **in that** the control circuit (6) is capable, in response to the signal of absence of the connecting cable, of controlling the power conversion circuit (4) in order to obtain, at the output thereof, a same predetermined quiescent value for said at least one characteristic of the output electric signal.

**2.** An electric power supply source (2) according to claim 1, **characterised in that** the cable presence detection circuit (46; 120) is capable of delivering a signal of presence of the connecting cable to the control circuit (6), said presence signal of the connecting cable being related to the selection code representative of the requirements of the electric load connected, and **in that** the control circuit (6) is capable, in response to the signal of presence of the connecting cable, of controlling the power conversion circuit (4) in order to obtain, at the output thereof, one value of said at least one characteristic of the output electric signal corresponding to the requirements of the electric charge connected.

**3.** An electric power supply source (2) according to claim 1 or 2, **characterised in that** it includes:

- at least one first terminal (14, 16) for connection to the connecting cable (72; 122; 180) to transmit to the electric load (74) the output electric signal delivered by the electric power conversion circuit (4),
- at least one second terminal (48; 132; 134) for connection to the connecting cable (72; 122; 180), said second terminal intended for co-operating with a corresponding terminal (90; 134) of the connecting cable in order to indicate the absence or the presence of the connecting cable, said at least one second connecting terminal being connected to the detection circuit (46; 120).

**4.** An electric power supply source (2) according to claim 3, **characterised in that** it comprises at least one third terminal (47; 160, 162, 164) for connection to the connecting cable to receive from the latter the selection code, said at least one third terminal being connected to the detection circuit (46).

**5.** An electric power supply source (2) according to any of the previous claims, **characterised in that** the cable (72) presence detection circuit (46) includes an electric switch (110) that may be toggled between a quiescent state and an active state in which it indicates the presence of the connecting cable (122), this toggling taking place under the control of the connecting cable (122).

6. An electric power supply source (2) according to claim 5, **characterised in that** the electric switch is a mechanical electricity switch (130) which is displaceable between a quiescent position and an active position in which it indicates the presence of the connecting cable (122), this displacement taking place under the action of the mechanical forces exerted to couple said at least one second terminal (132) to the corresponding terminal of the connecting cable (122).

7. An electric power supply source (2) according to any of the previous claims, **characterised in that** the controllable power conversion circuit (4) is capable of delivering an output electric signal whereof said at least one controllable characteristic is controllable within a value range comprised between a minimum value and a maximum value, and **in that** the quiescent value is equal to the minimum value.

8. An electric power supply source (2) according to any of the previous claims, **characterised in that** one said characteristic of the controllable output electric signal is the amplitude of the voltage delivered by the power supply source (2).

9. An electric power supply source (2) according to any of the previous claims, **characterised in that** one said characteristic of the controllable output electric signal is the intensity of the current delivered by the power supply source (2).

10. An electric power supply system for an electric load (74), **characterised in that** it comprises:

    - an electric power supply source (2) according to any of the previous claims, and
    - a removable cable (72; 122; 180) for connecting the electric load (74) to the power supply source (2), said cable being adapted for co-operating with the cable presence detection circuit (46; 120) of the power supply source.

11. A system according to claim 10, **characterised in that** the connecting cable includes a removable device (142) for adapting the cable to the power supply source (2).

12. A system according to claim 10 or 11, **characterised in that** the control circuit (6) of the power supply source is capable of regulating said at least one characteristic of the output electric signal, and **in that** a regulation loop of said at least one characteristic of the output signal is connected to the output of the controllable electric conversion circuit (4) of the power supply source (2) and to an input of the control circuit (6), a portion of the regulation loop being housed in the connecting cable when the latter is connected to the power supply source (2).

13. A system according to claim 10 or 11, **characterised in that** the control circuit (6) of the power supply source is capable of regulating said at least one characteristic of the output electric signal, and **in that** a regulation loop of said at least one characteristic of the output signal is connected to the output of the controllable electric conversion circuit (4) of the power supply source (2) and to an input of the control circuit (6), the regulation loop being housed solely inside the power supply source (2).

14. A system according to claim 12 or 13, **characterised in that** the regulation loop comprises at least one resistor (92), the value of said at least one resistor forming a selection code.

15. A system according to claims 12 and 14, **characterised in that** said at least one resistor is housed in the removable connecting cable.

16. A system according to claim 13, **characterised in that** the power supply source (2) comprises several resistors (174) capable of being connected to the regulation loop under the control of the connecting cable (180), the value of each of said resistors (174) forming, individually or in combination with the other resistors (174), a selection code.

**Patentansprüche**

1. Quelle (2) zur Versorgung mit elektrischer Energie, die dazu bestimmt ist, über ein lösbares Verbindungskabel (72; 122; 180} mit einer elektrischen Last (74) verbunden zu werden, umfassend:

- eine steuerbare Schaltung (4) zur Umwandlung von elektrischer Energie, um ein elektrisches Eingangssignal in ein elektrisches Ausgangssignal umzuwandeln, wobei mindestens ein Merkmal des elektrischen Ausgangssignals steuerbar ist,

- eine Schaltung (6) zur Steuerung der steuerbaren Schal tung zur Energieumwandlung, um den Wert des mindestens einen Merkmals des elektrischen Ausgangssignals in Abhängig keit von einem Wahlcode zu steuern, der die Anforderungen der angeschlossenen Last darstellt,

**dadurch gekennzeichnet, dass** sie eine Schaltung (46; 120) zur Erfassung des Vorhandenseins des Kabels (72; 122; 180) umfasst, die in der Lage ist, der Steuerschaltung (6) ein Signal des Fehlens des Verbindungskabels zu liefern, und dass die Steuerschaltung (6) in der Lage ist, als Antwort auf das Signal des Fehlens des Verbindungskabels die Schaltung (4) zur Energieumwandlung zu steuern, um an deren Ausgang einen gleichen zuvor vorbestimmten Ruhewert für dieses mindestens eine Merkmal des elektrischen Ausgangssignals zu erhalten.

2. Versorgungsquelle (2) nach Anspruch 1, **dadurch gekennzeichnet, dass** die Schaltung (46; 120} zur Erfassung des Vorhandenseins eines Kabels in der Lage ist, der Steuerschaltung (6) ein Signal des Vorhandenseins des Verbindungskabels zu liefern, wobei dieses Signal des Vorhandenseins des Verbindungskabels von dem die Anforderungen der angeschlossenen Last darstellenden Wahlcode abhängig ist, und dass die Steuerschaltung (6) in der Lage ist, als Antwort auf das Signal des Vorhandenseins des Verbindungskabels die steuerbare Schaltung (4) zur Umwandlung von e-lektrischer Energie zu steuern, um an deren Ausgang einen Wert dieses mindestens einen Merkmals des elektrischen Ausgangssignals zu erhalten, der den Anforderungen der angeschlossenen Last entspricht.

3. Versorgungsquelle (2) nach Anspruch 1 oder 2, **dadurch gekennzeichnet, dass** sie umfasst:

- mindestens eine erste Klemme (14, 16) zum Anschluss an das Verbindungskabel (72; 122; 180), um zur Last (74) das von der Schaltung (4) zur Umwandlung von elektrischer Energie gelieferte elektrische Ausgangssignal zu übertragen,
- mindestens eine zweite Klemme (48; 132; 134) zum An schluss an das Verbindungskabel (72; 122; 180), die dazu bestimmt ist, mit einer entsprechenden Klemme (90; 134) des Verbindungskabels zusammenzuwirken, um das Fehlen oder das Vorhandensein des Verbindungskabels anzuzeigen, wobei diese mindestens eine zweite Anschlussklemme mit der Erfassungs schaltung (46; 120) verbunden ist.

4. Versorgungsquelle (2) nach Anspruch 3, **dadurch** gekenn zeichnet, dass sie mindestens eine dritte Klemme (47; 160; 162; 164) zum Anschluss an das Verbindungskabel umfasst, um von diesem den Wahlcode zu erhalten, wobei diese mindestens eine dritte Klemme mit der Erfassungsschaltung (46) verbun den ist.

5. Versorgungsquelle (2) nach einem der vorhergehenden An sprüche, **dadurch gekennzeichnet, dass** die Schaltung (46) zur Erfassung des Vorhandenseins des Kabels (72) einen elektrischen Schalter (110) aufweist, der zwischen einem Ruhezustand und einem aktiven Zustand kippen kann, in dem er das Vorhandensein des Verbindungskabels (122) anzeigt, wobei dieses Kippen unter vom Verbindungskabel (122) ausgeübter Steuerung stattfindet.

6. Versorgungsquelle (2) nach Anspruch 5, **dadurch gekennzeichnet, dass** der elektrische Schalter ein mechanischer Elektrizitätsschalter (130) ist, der zwischen einer Ruhe Stellung und einer aktiven Stellung bewegbar ist, in der er das Vorhandensein des Verbindungskabels (122) anzeigt, wo bei diese Bewegung unter der Einwirkung der mechanischen Kräfte stattfindet, die eingesetzt werden, um die mindes tens eine zweite Klemme (132) mit der entsprechenden Klemme des Verbindungskabels (122) zu koppeln.

7. Versorgungsquelle (2) nach einem der vorhergehenden Ansprüche, **dadurch gekennzeichnet, dass** die steuerbare Schaltung (4) zur Energieumwandlung in der Lage ist, ein elektrisches Ausgangssignal zu liefern, dessen mindestens eines steuerbare Merkmal in einem Bereich von Werten einstellbar ist, die zwischen einem minimalen Wert und einem maximalen Wert liegen, und dass der Ruhewert gleich dem minimalen Wert ist.

8. Versorgungsquelle (2) nach einem der vorhergehenden Ansprüche, **dadurch gekennzeichnet, dass** ein Merkmal des steuerbaren elektrischen Ausgangssignals die Amplitude der von der Versorgungsquelle (2) gelieferten Spannung ist.

9. Versorgungsquelle (2) nach einem der vorhergehenden An sprüche, **dadurch gekennzeichnet, dass** ein Merkmal des steuerbaren elektrischen Ausgangssignals die Stärke des von der Versorgungsquelle (2) gelieferten Stroms ist.

**10.** System zur Versorgung einer elektrischen Last (74) mit elektrischer Energie, **dadurch gekennzeichnet, dass** es umfasst:

- eine Quelle (2) zur Versorgung mit elektrischer Energie nach einem der vorhergehenden Ansprüche und
- ein lösbares Kabel (72; 122; 180) zur Verbindung der Last (74) mit der Versorgungsquelle (2), wobei dieses Kabel da für ausgelegt ist, mit der Schaltung (46; 120) zur Erfassung des Vorhandenseins des Kabels der Versorgungsquelle zusammenzuwirken.

**11.** System nach Anspruch 10, **dadurch gekennzeichnet, dass** das Verbindungskabel eine abnehmbare Vorrichtung (142) zur Anpassung des Kabels an die Versorgungsquelle (2) aufweist.

**12.** System nach Anspruch 10 oder 11, **dadurch gekennzeichnet, dass** die Steuerschaltung (6) der Versorgungsquelle in der Lage ist, das mindestens eine Merkmal des Ausgangs signals zu regeln und dass eine Schleife zum Regeln dieses mindestens einen Merkmals des Ausgangssignals mit dem Ausgang der steuerbaren Schaltung (4) zur Umwandlung von elektrischer Energie der Versorgungsquelle (2) und mit einem Eingang der Steuerschaltung (6) verbunden ist, wobei ein Teil der Regelschleife in dem Verbindungs kabel untergebracht ist, wenn dieses mit der Versorgungs quelle (2) verbunden ist.

**13.** System nach Anspruch 10 oder 11, **dadurch gekennzeichnet, dass** die Steuerschaltung (6) der Versorgungsquelle in der Lage ist, das mindestens eine Merkmal des elektrischen Ausgangssignals zu regeln, und dass eine Schleife zum Regeln dieses mindestens einen Merkmals des Ausgangssignals mit dem Ausgang der steuerbaren Schaltung (4) zur Umwandlung von elektrischer Energie der Versorgungsquelle (2) und mit einem Eingang der Steuerschaltung (6) verbunden ist, wobei die Regelschleife ausschließlich im Inneren der Versorgungsquelle (2) untergebracht ist.

**14.** System nach Anspruch 12 oder 13, **dadurch gekennzeichnet, dass** die Regelschleife mindestens einen Widerstand (92) umfasst, wobei der Wert dieses mindestens einen Widerstands einen Wahlcode bildet.

**15.** System nach den Ansprüche 12 und 14, **dadurch gekennzeichnet, dass** dieser mindestens eine Widerstand in dem lösbaren Verbindungskabel untergebracht ist.

**16.** System nach Anspruch 13, **dadurch gekennzeichnet, dass** die Versorgungsquelle (2) mehrere Widerstände (174) umfasst, die in der Lage sind, mit der Regelschleife unter vom Verbindungskabel (180) ausgeübter Steuerung verbunden zu werden, wobei der Wert jedes dieser Widerstände (174) allein oder in Kombination mit den anderen Widerständen (174) einen Wahlcode bildet.

*FIG.1*

*FIG.2*

**FIG.3A**

**FIG.3B**

92    140

-2-    -74-

*FIG.4A*

92    142    144

-2-    -74-

*FIG.4B*

92

150

-2-    -74-

*FIG.4C*

154    152    92

-2-    -74-

*FIG.4D*

**FIG.5**